# EUROPEAN PATENT APPLICATION

(11) **EP 2 760 184 A1**
(43) Date of publication of application: **30.07.2014**
(21) Application number: 14153134.3
(22) Date of filing: 29.01.2014
(51) Int. Cl.: H04L 29/08, H04L 12/863

(54) **Method and system for processing resource requests**

(30) Priority: 29.01.2013 GB 201301567
(71) Applicant: Openwave Mobility, Inc., Redwood City, CA 94063 (US)
(72) Inventor: Todd, Darren, Richard, Belfast, BT1 2JF (IE)
(74) Representative: EIP

(57) **Abstract**

Methods and systems for processing of a resource request received at an intermediate server (102) from a client device (103). A first resource request comprising a first resource identifier associated with a first requested resource is received from a first client device (103). A channel (115) between the intermediate server (102) and a further client (103) device in respect of the first requested resource and for use in transmitting data relating to the first requested resource is identified based on the first resource identifier. Data transmitted via the channel (115) is used as basis for responding to the first resource request.

## Description

### Technical Field

The present invention relates to processing of a resource request received at an intermediate server from a client device. More particularly, the invention relates to processing the resource request on the basis of data transmitted via a channel between the intermediate server and a further client device in respect of the requested resource.

### Background

The term 'proxy server' is often used to refer to an intermediate device or server that acts to arbitrate communications between devices on a network. For example, a proxy server may act as an intermediary for requests received from a client device and addressed to a remote server such as an origin server, an e-mail server, or other type of content-serving server. Such requests are typically requests for resources (e.g. Web pages or multimedia files, including e-mails) or services which are stored or accessed via the remote server.

Typically, a proxy server will employ caching techniques in order to reduce the time required to service a request received from the client device by storing local copies of frequently requested resources. In addition to reducing the time required to service requests from the client devices, caching of resources in this manner provides a reduction of bandwidth usage upstream of the proxy server. Once a resource has been selected by the proxy server for caching, it is stored at a disk location where it can be accessed in response to subsequent resource requests.

An example of conventional disk based Web caching is the Apache™ HTTPD project (http://httpd.apache.org/) which employs Web caching which is compliant with the Hypertext Transfer Protocol Internet standards as set out in RFC 2616 (http://www.ietf.org/rfc/rfc2616.txt).

### Summary

In accordance with a first aspect, there is provided a method of processing resource requests from a plurality of client devices at an intermediate server, the method comprising: receiving a first resource request from a first client device, the first resource request comprising a first resource identifier associated with a first requested resource; identifying a channel between the intermediate server and a further client device in respect of the first requested resource based on the first resource identifier, the channel being for use in transmitting data relating to the first requested resource; and responding to the first resource request on the basis of data transmitted via the channel. This first exemplary embodiment enables multiple resource requests in respect of a particular resource to be serviced on the basis of data in a pre-existing channel between the intermediate server and a further client device. Thus, further resource requests may be serviced by the intermediate server without needing to retrieve the resource from the location where it is stored, such as a remote server.

In some embodiments, the identified channel may comprise a buffer which temporarily stores the data transmitted to the further client device. The temporary nature of the buffer allows use of fast access memory which may be limited in terms of capacity, thereby ensuring that resource data can be accessed rapidly and resource requests may be serviced more quickly than for conventional disk based caching techniques. In some embodiments, the buffer is associated with an active transaction between the intermediate server and the further client device in respect of the first requested resource.

Typically, when in use, the buffer may store a first part of the first requested resource and the method further comprises retrieving a second part of the first requested resource while responding to the first resource request on the basis of the first part of the requested resource. This ensures that multiple resource requests in respect of a particular resource may be serviced concurrently, even when the requested resource in still being retrieved from the remote server.

In some embodiments, the first resource identifier is a uniform resource identifier. In such embodiments, the first key is typically generated as a hash function of the uniform resource identifier.

In order to provide relatively fast access to the resource data stored in the buffer, some embodiments store the buffer in a volatile memory.

In some embodiments, the data transmitted to the further client device stored in the buffer is discrete payload data associated with one or more packets transmitted to the further client device.

In some embodiments the method further comprises monitoring resource requests between the intermediate server and the plurality of client devices in respect of the first requested resource and deleting the buffer once all outstanding resource requests in respect of the first requested resource have been completed. This ensures that the buffer is made available for subsequent resource requests when there are no outstanding resource requests for the first requested resource, thereby ensuring efficient use of the memory in which the buffer is stored. Moreover, further embodiments may comprise waiting a predetermined time after all outstanding resource requests in respect of the first requested resource have been completed before deleting the buffer, thereby increasing availability of the buffered resource and efficiency of the method. Similarly, further embodiments of the method may comprise monitoring the channel between the intermediate server and the further client device in respect of the first requested resource and closing the channel in dependence on a communication status of the channel.

Embodiments are particularly applicable in situations where the first requested resource is located at a server remote from the intermediate server. In such embodiments, servicing of multiple resource requests for the resource on the basis of data in an existing channel between the intermediate server and a client device avoids multiple retrieval of the resource from the remote server and the associated delay.

In some embodiments, the method comprises generating a first key indicative of the first resource identifier and using the first key to identify the channel between the intermediate server and the further client device.

In some embodiments the identified channel comprises a buffer which temporarily stores the data transmitted to the further client device. In order to provide an efficient means for identifying the buffer, the intermediate server stores a data structure providing an association between the first key and the buffer, and the method comprises querying the data structure using the first key to identify the buffer.

In some embodiments, the method further comprises receiving a second resource request from a second client device, the second resource request comprising a second resource identifier associated with a second requested resource; generating a second key on the basis of the second resource identifier; retrieving the second requested resource and storing the second resource in the buffer if it is determined that there are no active transactions between the intermediate server and the plurality of client devices in respect of the first requested resource; and updating the data structure to include an association between the second key and the buffer. Such embodiments provide high utilisation of the buffer and efficient use of the memory in which the buffer is stored.

According to a second aspect, there is provided an intermediate server for processing resource requests from a plurality of client devices, the intermediate server comprising a processing system arranged to perform a method according to the first aspect.

According to a third aspect, there is provided a computer program product comprising computer readable instructions stored thereon, the computer readable instructions being executable by a computerised device to cause the computerised device to perform a method according to the first aspect.

According to a fourth aspect, there is provided a method of processing resource requests from a plurality of client devices at an intermediate server, the method comprising: receiving a first resource request from a first client device, the first resource request comprising a first resource identifier associated with a first requested resource; identifying a buffer associated with an active transaction between the intermediate server and a further client device in respect of the first requested resource; and responding to the first resource request on the basis of data stored in the buffer.

### Brief Description of the Drawings

Further features and advantages of the invention will become apparent from the following description of preferred embodiments of the invention, given by way of example only, which is made with reference to the accompanying drawings.
Figure 1 is a schematic diagram of a system comprising a proxy server in accordance with an embodiment of the invention.
Figure 2 is a schematic diagram of a proxy server servicing a resource request from a first client device in accordance with an embodiment of the invention.
Figure 3 is a schematic diagram of a proxy server servicing a resource request from a second client device in accordance with an embodiment of the invention.
Figure 4 is a schematic diagram of a buffer for use in a method of servicing resource requests in accordance with an embodiment of the invention.
Figure 5 is a schematic diagram of a transaction list for use in a method of servicing resource requests in accordance with an embodiment of the invention.
Figure 6 is signalling diagram showing a method of servicing resource requests in accordance with an embodiment of the invention.
Figure 7 is a flow diagram showing a method of servicing resource requests in accordance with an embodiment of the invention.
Figures 8 is a flow diagram showing a method of monitoring a plurality of buffers in accordance with an embodiment of the invention.
Figure 9 is a schematic diagram of a proxy server in accordance with an embodiment of the invention.

Several parts or components appear in more than one of the above Figures and for clarity the same reference numeral is used to refer to the same part or component in all of the Figures.

### Detailed Description

Resources may be subject to many concurrent resource requests from multiple client devices. In such cases, conventional caching techniques require that the requested content is retrieved from the disk-based cache on a request-by-request basis, thereby leading to increased processor usage and frequent disk access.

Embodiments of the invention utilise communication channels within a proxy server to in effect cache resources as they are received from destination servers such as, but not limited to, so-called 'origin servers'. Typically, the communication channels will comprises one or more short lived transient buffers in physical memory which are used by the proxy server to service a large number of substantially concurrent resource requests without requiring the proxy server to access slower disk-based storage and/or to store a large amount of cached content.

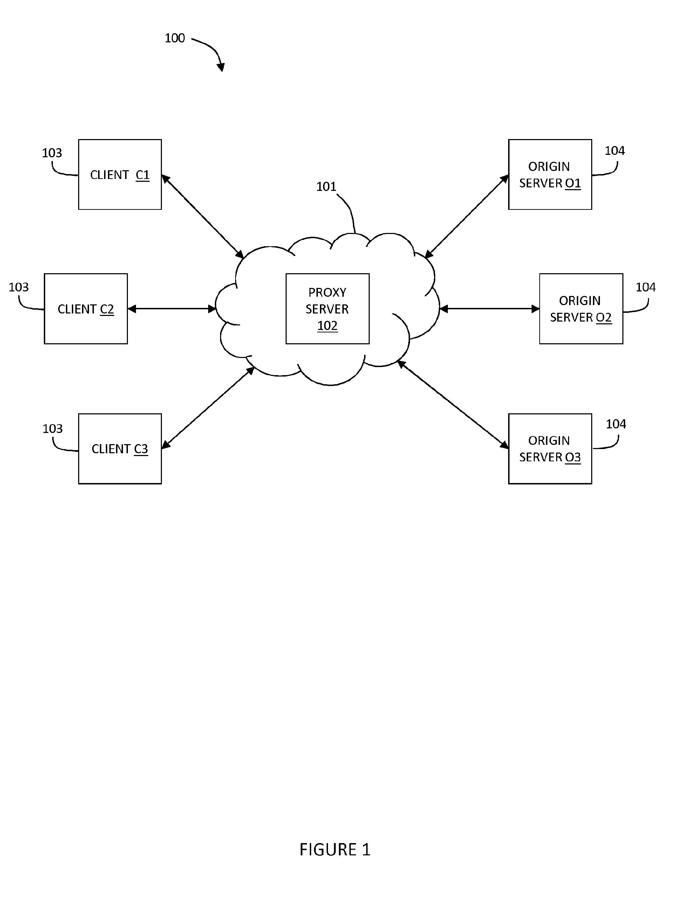

Figure 1 shows a system 100 comprising an intermediate network node in the form of a proxy server 102 according to an embodiment. The system 100 further comprises a network 101 (e.g. the Internet), a plurality of client devices 103, denoted individually as C1-C3, and a plurality of origin servers 104, denoted individually as O1-O3. The proxy server 102 is operably connected to the network 101 such that it can receive resource requests (e.g. HTTP requests) from the plurality of client devices 103, the resource requests being associated with resources located at or accessed via the plurality of origin servers 104. In this respect, the proxy server 102 operates as an intermediate server in non-transparent mode, wherein the plurality of client devices 103 are aware of the proxy server 102 and are configured to send resource requests via the proxy server 102.

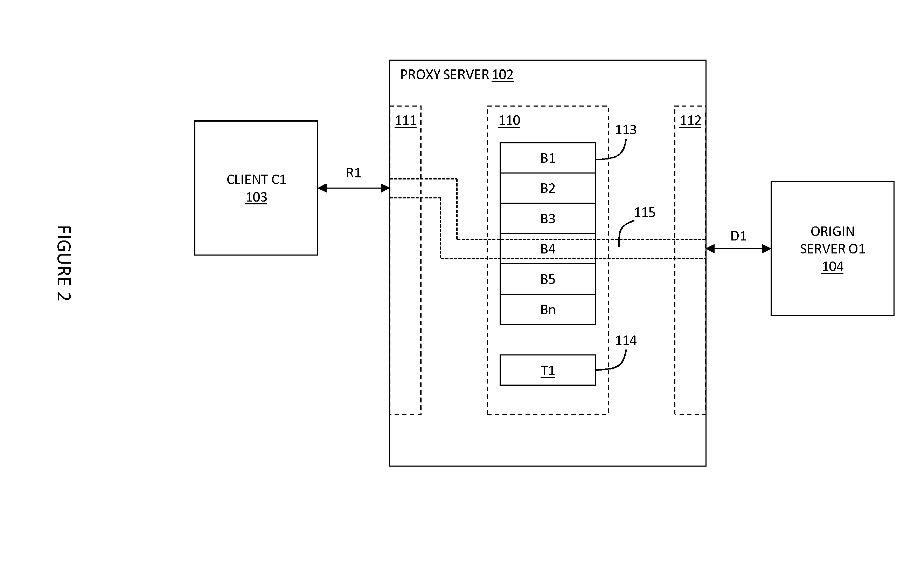

Figure 2 shows the proxy server 102 in more detail and illustrates the flow of data through the proxy server 102 in response to a first resource request R1 received from a first client device C1 and addressed to the origin server O1.

The proxy server 102 comprises a memory 110 and network interfaces 111 & 112 which provide means for the proxy server 102 to communicate with the first client device C1 and the origin server O1 respectively via the network 101. The memory 110 is typically fast access memory, such as volatile random access memory (RAM), and includes a plurality of buffers 113, denoted B1-Bn, and a transaction list 114, denoted T1, which is used to manage and monitor the plurality of buffers 113. Although the embodiment shown in Figure 2 includes two network interfaces for the purposes of clarity, it will be appreciated that similar functionality can be achieved with a single network interface, or indeed more than two network interfaces.

The buffers 113 temporarily store resources as they are retrieved from the plurality of origin servers 104 for forwarding to the plurality of client devices 103. In the present embodiment, a buffer is a region of the memory 110 which is 'reserved' for temporary storage of data associated with requested resources. Accordingly, the buffers may be implemented, for example, as a fixed memory location in memory 110, or as a virtual buffer in software, pointing to a location in memory 110.

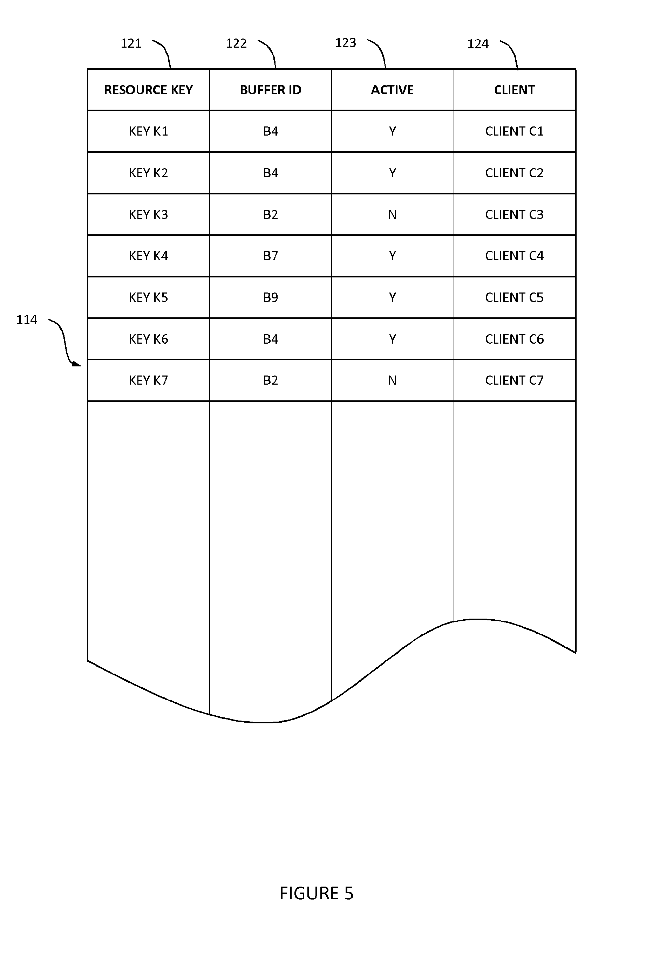

The transaction list T1 provides an association or mapping between the plurality of buffers 113 and a plurality of respective keys (discussed below) which are indicative of resource identifiers (described below in more detail with reference to Figure 5).

In the present embodiment, the proxy server 102 is configured to generate a key on the basis of a resource request received from a client device C1. With specific reference to the embodiment shown in Figure 2, the proxy server 102 receives the first resource request R1 from client device C1 and applies a hash algorithm to a resource identifier included in the resource request R1 to generate a first key K1. The proxy server 102 then uses the first key K1 to query the transaction list T1 and determine whether any of the buffers 113 store data associated with the requested resource. In the present embodiment, none of the buffers 113 store the requested resource, so the proxy server 102 forwards the request to the origin server O1. The proxy server 102 further uses the transaction list T1 to identify buffer B4 as being available for servicing of the first resource request R1 and updates the transaction list T1 to include an association between the first key K1 and buffer B4. In response to the request, the origin server O1 returns data D1 associated with requested resource and the proxy server 102 stores data D1 in buffer B4 prior to forwarding the data D1 onto the first client device C1 to service the first resource request R1.

The dotted 'pipe' 115 shown in Figure 2 represents a communication channel between first client device C1 and the origin server O1 in respect of the first resource request R1. In this context, the communication channel 115 represents the flow of data between the first client device C1 and the origin server O1, and incorporates one or more components of the proxy server 102, such as the network interfaces 111 & 112, a central processing unit (not shown) and a communications bus (not shown). It will be evident from Figure 2 that the communication channel 115 includes buffer B4 which, as discussed above, is used to temporarily store data D1 received from origin server O1 in respect of the first resource request R1.

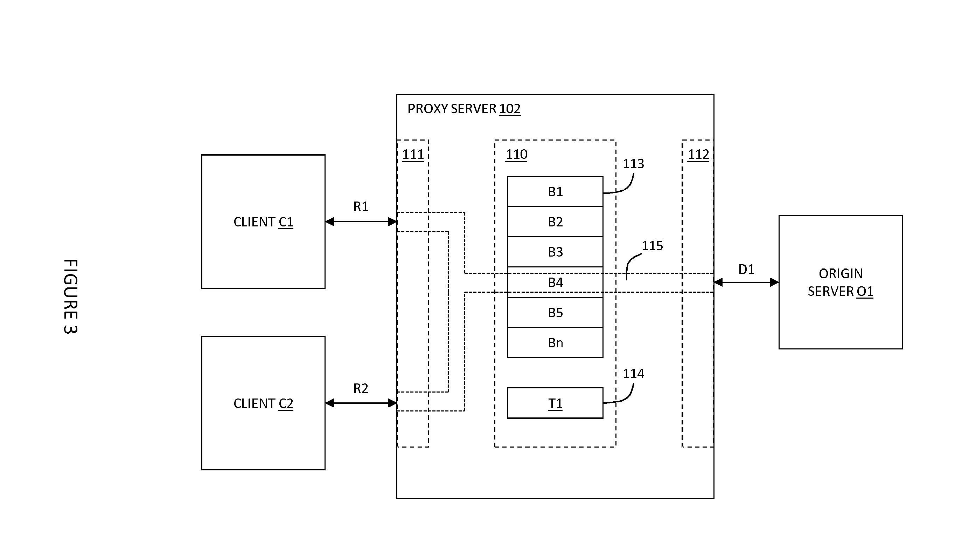

Figure 3 shows the flow of data through the proxy server 102 in response to a second resource request R2 received from a second client device C2 and addressed to origin server O1 in respect of the same resource associated with the first resource request R1. The second resource request R2 is received while the transaction between the first client device C1 and the origin server O1 in respect of the first resource request R1 is proceeding. Upon receipt of the second resource request R2, the proxy server 102 generates a second key K2 on the basis of a resource identifier included in the second resource request R2. The proxy server 102 uses the second key K2 to query the transaction list T1 to determine whether any of the buffers B1-Bn store data associated with the requested resource. In the present embodiment, the transaction list T1 will include an association between the generated key and buffer B4 as a result of the first resource request R1 from the first client device C1. Thus, the proxy server 102 identifies buffer B4 as storing part or whole of the data associated with requested resource and proceeds to service the resource request R2 on the basis of the data stored in buffer B4. In other words, the proxy server 102 effectively services the second resource request R2 from the second client device C2 using data in the communication channel 115, which was opened in response to the first resource request from client device C1. In this manner, the second resource request R2 from second client device C2 can be serviced by the proxy server 102 without having to forward the request for the resource to the origin server 104 and without having to access slower disk-based storage.

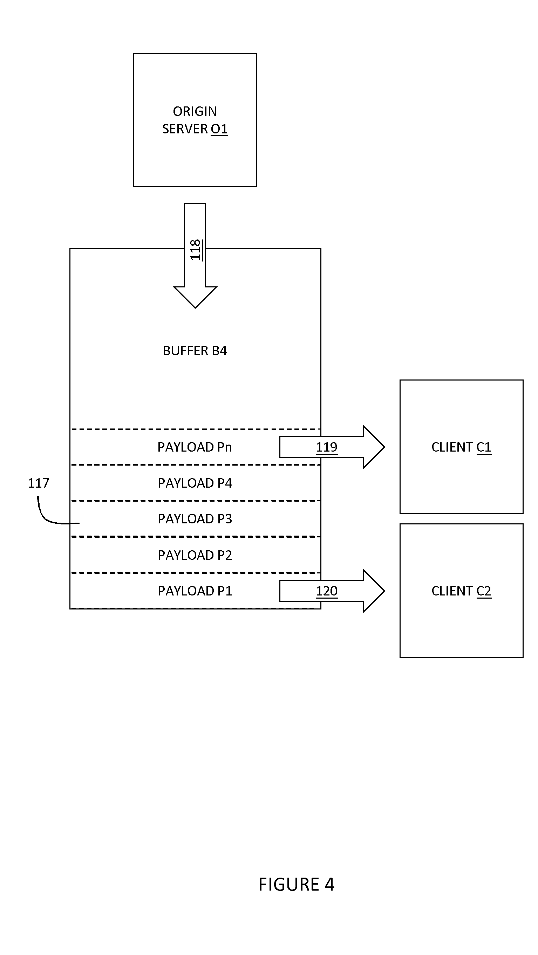

Operation of the buffers 113 is explained in more detail with reference to Figure 4, which shows the data flow to and from buffer B4 in relation to the first resource request R1 and second resource request R2 of Figures 2 and 3. In response to the first resource request R1, the origin server O1 typically provides the requested resource using the Internet protocol (IP) suite, including a transport layer protocol such as the Transmission Control Protocol (TCP) to ensure reliable transmission of the requested resource. In accordance with conventional methods, the requested resource comprises a plurality of TCP packets which are received by the proxy server 102 (data flow indicated by arrow 118). Upon receipt of the TCP packets, the proxy server 102 stores their respective payloads 117, denoted P1-Pn, in buffer B4. Thus, the buffer B4 stores discrete payload data associated with the TCP packets received at the proxy server 102.

Typically, each payload stored in buffer B4 includes content data and metadata associated with the content data. For example, where the requested resource is a HTTP resource, the payload will typically comprise the HTTP header (including HTTP metadata) and the HTTP content (including the content data). In alternative embodiments, some or all of the metadata for respective payloads may be stored outside the buffer B4, such that the buffer contains only content data. In such embodiments, the proxy server 102 is configured to combine the separately stored metadata and content data prior to delivery to a requesting client device.

As the payloads 117 are stored in buffer B4, the proxy server 102 simultaneously forwards the payloads 117 to the first client device C1, in order to service the first resource request R1 (data flow indicated by arrow 119). Subsequently, the proxy server 102 uses the payloads stored in buffer B4 to service the second resource request R2 which is received from the second client device C2 while the transaction in respect of the first resource request R1 is in progress (data flow indicated by arrow 120). Once both transactions in respect of the requested resource have been completed, the proxy server 102 may delete or 'free' buffer B4 for use in relation to subsequently received resource requests. In other words, the buffer B4 stores the payloads associated with a first part of the requested resource, retrieved in response to the first resource request R1, and continues to retrieve a second part of the requested resource while concurrently responding to the first resource request R1 and second resource request R2.

In some embodiments, the proxy server 102 may be configured to modify or augment the metadata for respective payloads stored in the buffers prior to forwarding them to a requesting client device. For example, where the payloads relate to a HTTP resource, the proxy server 102 may be configured to modify a date field in the HTTP header to ensure consistency with the timing of an associated resource request.

With reference to Figure 5, the transaction list T1 includes a data structure which comprises resource key data 121, buffer data 122, activity data 123 and client data 124. Each row in the data structure provides an association or mapping between a particular resource key (i.e. resource key data 121) and a particular buffer (i.e. buffer data 122), and indicates whether the transaction in respect of an associated client device (i.e. client data 124) is active or inactive (i.e. activity data 123). For example, the first row of the data structure shown in Figure 5 indicates that resource key K1 is associated with buffer B4 in respect of an active transaction between the proxy server 102 and client device C1.

As discussed above, the resource keys are generated on the basis of the resource identifiers which are included in the resource requests received from the client devices 103. Typically, the resource key is generated using a hash function which is applied to the resource identifier. For example, when the requested resource is a Hypertext Transfer Protocol (HTTP) resource, the resource key may be generated by applying the MD5 Message-Digest Algorithm to the Uniform Resource Identifier (URI) included in the HTTP resource request. It will be appreciated that whilst each resource key in data structure 114 is provided with a unique reference K1-Kn for clarity purposes, resource keys in respect of the same resource identifier will, in practice, be identical and associated with the same buffer. For example, resource keys K1 and K2 in data structure 114 are identical and are both associated with buffer B4 and the resource data stored therein.

The activity data 123 provides an indication as to whether the associated entry in the data structure 114 is associated with an active transaction between the proxy server 102 and the indicated client device 103 in respect of the resource stored in the associated buffer. Typically, the activity data 123 takes the form of a binary value, where a '1' indicates that the transaction between the proxy server 102 and the associated client device remains active (i.e. the transaction is on-going), and a '0' indicates that the transaction between the proxy server 102 and the associated client device is inactive (i.e. the transaction has finished or been aborted). As discussed above, when there are no active transactions in respect of a particular buffer, the buffer may be deleted or reused in order to efficiently utilise memory 110. For example, in data structure 114, buffer B2 is not associated with any active transactions so may be deleted, cleared or reused by the proxy server 102.

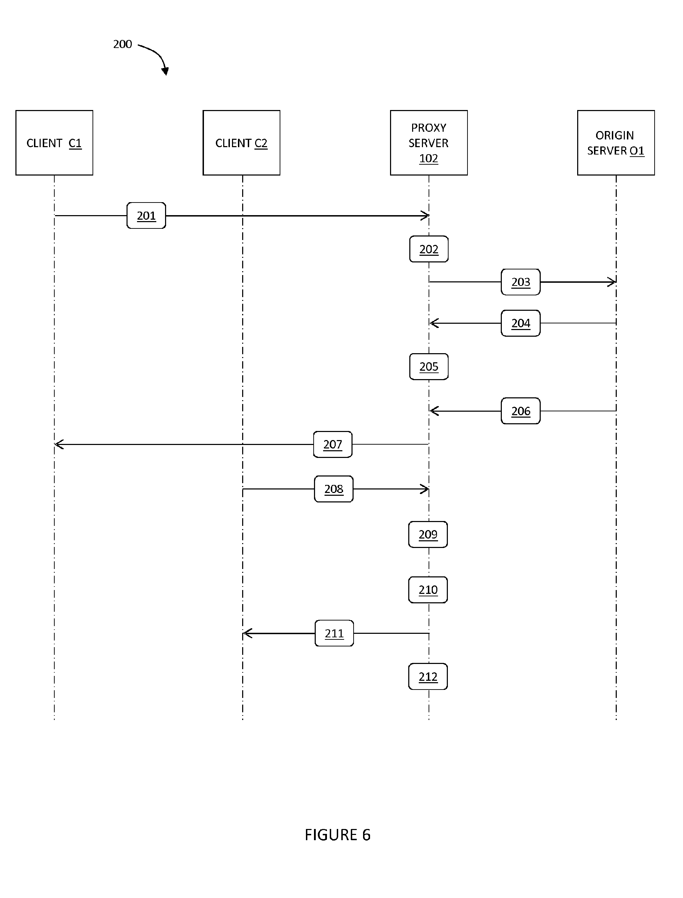

Figure 6 is a signalling diagram showing the various interactions between the first client device C1, second client device C2, the proxy server 102 and origin server O1 shown in Figures 2 and 3 in accordance with an embodiment. Initially, the proxy server 102 receives the first resource request R1 from the first client device C1 in respect of a resource stored or accessed via origin server O1 [step 201]. Next, the proxy server 102 hashes the resource identifier included in the first resource request R1 to generate a key K1, and the proxy server 102 queries the transaction list T1 to determine whether the key K1 is associated with a buffer for an active transaction in respect of the requested content [step 202]. At this stage, the requested resource is not stored in any of the buffers B1-Bn, so the transaction list T1 does not include an entry for key K1. Accordingly, the proxy server 102 forwards the resource request R1 to the origin server O1 [step 203] and the origin server O1 replies with data D1 associated with the requested resource [step 204]. Upon receipt of data D1 from origin server O1, the proxy server 102 examines the data D1 to determine whether the data is cacheable (e.g. by examining the HTTP headers), and if it is determined that it can be cached, the proxy server 102 selects buffer B4 (i.e. by querying the transaction list T1) and updates transaction list T1 to include an association between the selected buffer B4 and the key K1 [step 205]. Following this, the data D1 is written or streamed into buffer B4 as the associated packets are received at the proxy server 102 [step 206]. As the data associated with the requested resource is written into buffer B4, it is simultaneously sent to the first client device C1 by the proxy server 102 to service the first resource request R1 [step 207].

While the transaction between the proxy server 102 and the first client device C1 is on-going (e.g. during the sending of data from the proxy server 102 to the client C1), the second client device C2 sends a second resource request R2 in respect of the same resource [step 208]. In response, the proxy server 102 hashes the resource identifier included in the second resource request R2 to generate a key K2 (which will be identical to key K1) [step 209]. The proxy server 102 then queries the transaction list T1 to determine whether key K2 is associated with a buffer for an in-progress transaction and finds a match for buffer B4 for the transaction between the first client device C1 and the proxy server 102 [step 210]. Once buffer B4 has been identified as storing data associated with the requested resource, the proxy server 102 proceeds to service the request R2 from the second client device C2 on the basis of the data stored in buffer B4 [step 211]. Once the second resource request R2 has been serviced, the proxy server determines (e.g. by reference to the transaction list T1) that there are no outstanding resource requests in respect of the data stored in buffer B4 and proceeds to delete, clear or reuse buffer B4 [step 212].

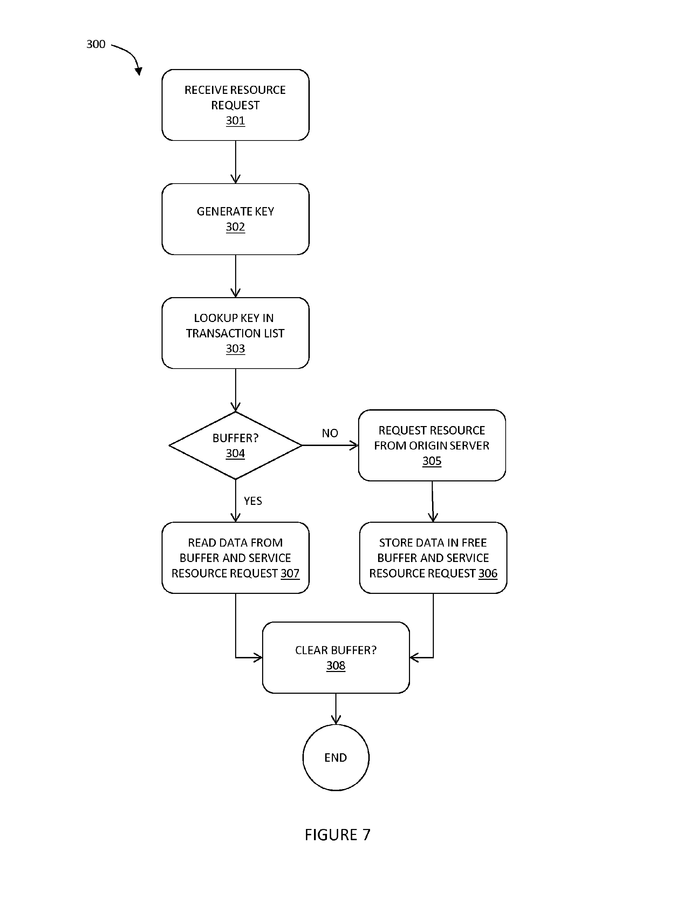

Figure 7 is a flow diagram showing a method of processing resource requests 300 as performed by the proxy server 102 in accordance with an embodiment. In a first step, the proxy server 102 receives a resource request from a client device 103 [step 301]. As described above, the proxy server 102 generates a key by applying a hash function to the resource identifier included in the resource request [step 302] and looks up the key in the transaction list [step 303]. If the transaction list does not include an entry for the generated key, the proxy server 102 proceeds to request the requested resource from origin server 104 in the normal way [step 305], identifies an available buffer, and stores the data received from the origin server 104 in the identified buffer [step 306]. Alternatively, if the proxy server 102 identifies a buffer containing data associated with the requested resource at step 304, the proxy server 102 proceeds to service the request on the basis of data stored in the identified buffer [step 307]. Once the resource request has been serviced, the proxy server 102 determines whether the identified buffer may be cleared for use in subsequent resource requests [step 308]. Clearing of the buffers at step 308 is typically performed by querying the transaction list 114 to determine whether there are outstanding active transactions in respect of the identified buffer. If there are no active transactions, the proxy server 102 may delete the active buffer or 'free' it for use for servicing subsequent resource requests. In some embodiments, the proxy server 102 is configured to delay clearing of a buffer for which there are no active transactions for a specified time period in order to increase its availability for subsequent resource requests and thereby improve efficiency.

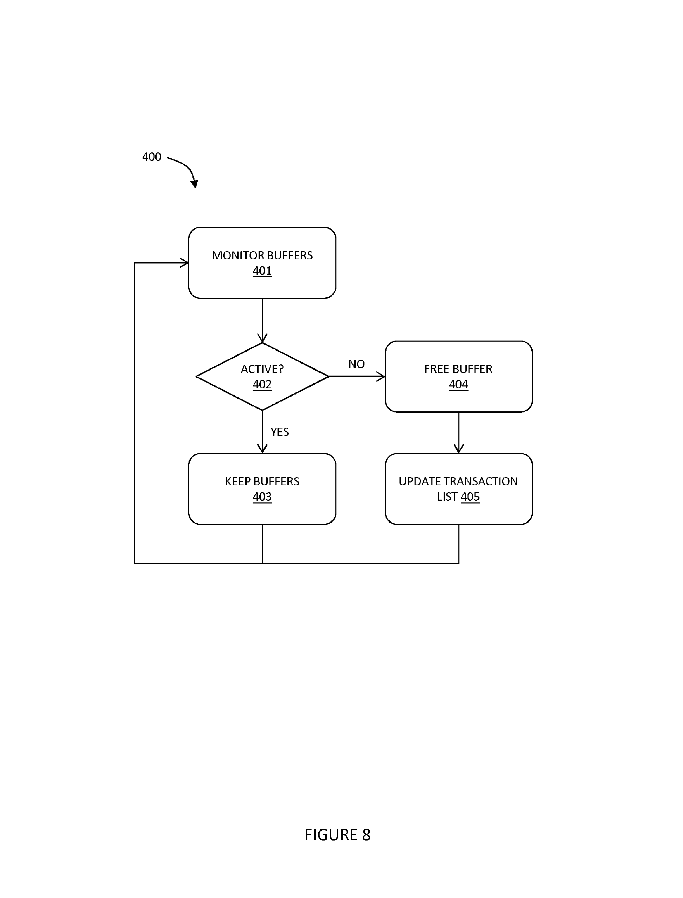

In order to optimise usage of memory 110, some embodiments of the proxy server will typically perform periodic monitoring of the buffers 113 in order to identify buffers which can be deleted or reused for subsequent resource requests. With reference to Figure 8, a method 400 of monitoring the buffers in accordance with an embodiment comprises monitoring each of the plurality of buffers 113 [step 401] to determine those buffers for which there are active transactions between the proxy server 102 and the client devices 103 in respect of the request resource [step 402]. Where it is determined that a particular buffer is not associated with an active transaction, the buffer is 'freed' for use for servicing subsequent resource requests or deleted [step 404] by updating the transaction list 114 as appropriate [step 405]. Alternatively, if it is determined the all buffers are associated with active transaction at step 402, no action is required [step 403] and the process is repeated. Typically, method 400 is repeated according to a specified time period (e.g. 0.01s or 0.1) or a specified number of clock cycles. Typically, the specified time period or specified number of clock cycles may be selected to optimise utilisation of the buffers 113 by increasing the time for which they are available for servicing incoming requests, whilst ensuring that sufficient buffer space is made available for storage of new requests.

It should also be noted that at least some of the operations for the methods may be implemented using software instructions stored on a computer useable storage medium for execution by a computer. As an example, an embodiment of a computer program product includes a computer useable storage medium to store a computer readable program that, when executed on a computer, causes the computer to perform operations, as described hereinbefore.

Furthermore, embodiments of the invention can be embodied in the form of a computer program product accessible from a computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

The computer-useable or computer-readable medium can be an electronic, magnetic, optical, electromagnetic, infrared, or semiconductor system (or apparatus or device), or a propagation medium. Examples of a computer-readable medium include a semiconductor or solid state memory, magnetic tape, a removable computer diskette, a random access memory (RAM), a read-only memory (ROM), a rigid magnetic disk, and an optical disk. Current examples of optical disks include a compact disk with read only memory (CD-ROM), a compact disk with read/write (CD-R/W), and a digital versatile disk (DVD).

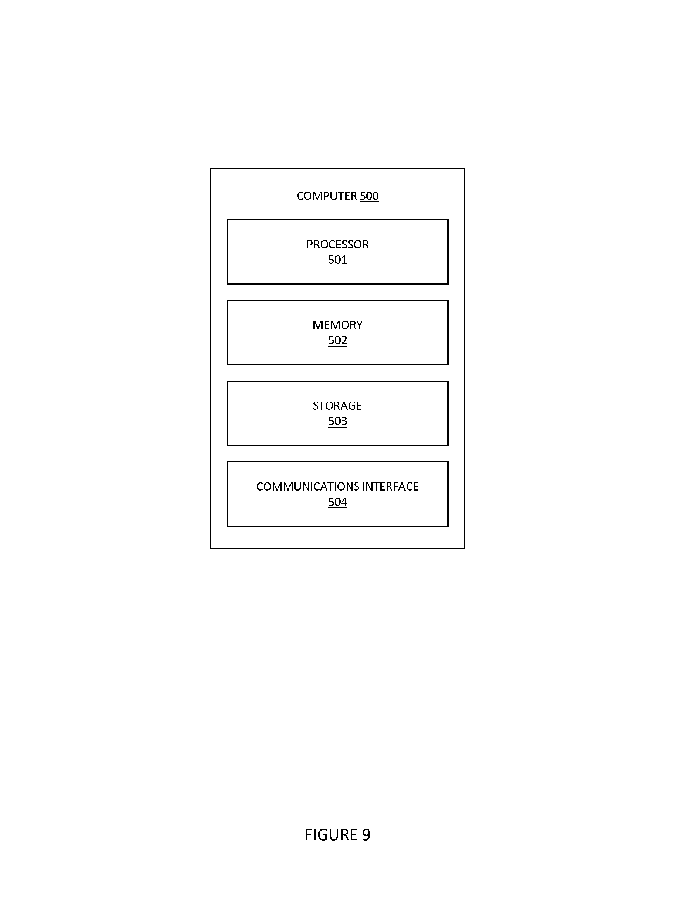

The functionality of the embodiments depicted in Figures 1 to 8 is typically performed by a computer that executes computer readable instructions. Figure 9 depicts a computer 500 that includes a processor 501, memory 502, storage 503 and a communications interface 504. The processor 501 may include a multifunction processor and/or an application-specific processor, examples of which include the PowerPC™ family of processors by IBM™ and the x86 family of processors by Intel™. The memory 502 within the computer is typically RAM and storage 503 is typically a large capacity permanent storage device such as a magnetic hard disk drive or solid state memory device. The communications interface 504 enables communications with other computers in a network using as suitable protocol, such as the Internet Protocol (IP). The computer executes computer readable instructions stored in storage 503 to implement embodiments of the invention as described hereinbefore.

The above embodiments are to be understood as illustrative examples of the invention. Further embodiments of the invention are envisaged. For example, in further embodiments, the proxy server 102 may operate as an intermediate device in transparent mode in respect of interactions between the client devices 103 and the proxy server 102, and where the network 101 is configured to ensure that resource requests from the client devices 103 are routed via the proxy server 102.

Moreover, although the in embodiments described above the buffers 113 are located in RAM (e.g. system heap memory), it will be appreciated the buffers 113 may alternatively or additionally located in the processor's local cache memory, cache memory located in the a network interface, or any other suitable location in the proxy server 102.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of processing resource requests from a plurality of client devices at an intermediate server, the method comprising:
receiving a first resource request from a first client device, the first resource request comprising a first resource identifier associated with a first requested resource;
identifying a channel between the intermediate server and a further client device in respect of the first requested resource based on the first resource identifier, the channel being for use in transmitting data relating to the first requested resource; and
responding to the first resource request on the basis of data transmitted via the channel.

2. A method according to claim 1, wherein the identified channel comprises a buffer which temporarily stores the data transmitted to the further client device.

3. A method according to claim 2, wherein the buffer is associated with an active transaction between the intermediate server and the further client device in respect of the first requested resource.

4. A method according to claim 2 or claim 3, wherein the buffer stores a first part of the first requested resource and the method further comprises retrieving a second part of the first requested resource while responding to the first resource request on the basis of the first part of the requested resource.

5. A method according to any one of the preceding claims, wherein the first resource identifier is a uniform resource identifier.

6. A method according to any one of claims 2 to 5, wherein the data transmitted to the further client device stored in the buffer is discrete payload data associated with one or more packets transmitted to the further client device.

7. A method according to any one of claims 2 to 6, wherein the method further comprises monitoring resource requests between the intermediate server and the plurality of client devices in respect of the first requested resource and deleting the buffer once all outstanding resource requests in respect of the first requested resource have been completed.

8. A method according to claim 7, wherein the method further comprises waiting a predetermined time after all outstanding resource requests in respect of the first requested resource have been completed before deleting the buffer.

9. A method according to any one of claims 1 to 6, wherein the method further comprises monitoring the channel between the intermediate server and the further client device in respect of the first requested resource and closing the channel in dependence on a communication status of the channel.

10. A method according to any one of the proceeding claims, wherein the first requested resource is located at a server remote from the intermediate server.

11. A method according to any one of the preceding claims, further comprising generating a first key indicative of the first resource identifier and using the first key to identify the channel between the intermediate server and the further client device.

12. A method according to claim 11, wherein the identified channel comprises a buffer which temporarily stores the data transmitted to the further client device, the intermediate server stores a data structure providing an association between the first key and the buffer, and the method comprises querying the data structure using the first key to identify the buffer.

13. A method according to claim 12, wherein the method further comprises:
receiving a second resource request from a second client device, the second resource request comprising a second resource identifier associated with a second requested resource;
generating a second key on the basis of the second resource identifier;
retrieving the second requested resource and storing the second resource in the buffer if it is determined that there are no active transactions between the intermediate server and the plurality of client devices in respect of the first requested resource; and
updating the data structure to include an association between the second key and the buffer.

14. An intermediate server for processing resource requests from a plurality of client devices, the intermediate server comprising a processing system arranged to perform a method according to any one of claims 1 to 13.

15. A computer program product comprising computer readable instructions stored thereon, the computer readable instructions being executable by a computerised device to cause the computerised device to perform a method according to any one of claims 1 to 13.
